(19) Europäisches Patentamt
European Patent Office
Office européen des brevets

(11) EP 3 853 778 B1

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **19753084.3**

(22) Anmeldetag: **13.08.2019**

(51) Internationale Patentklassifikation (IPC):
**G06N 3/09** (2023.01)  **G06N 3/0985** (2023.01)
**G05B 13/02** (2006.01)  *G06N 7/01* (2023.01)
**G06N 3/082** (2023.01)

(52) Gemeinsame Patentklassifikation (CPC):
**G05B 13/027; G06N 3/09; G06N 3/0985;**
G06N 3/082; G06N 7/01

(86) Internationale Anmeldenummer:
**PCT/EP2019/071735**

(87) Internationale Veröffentlichungsnummer:
**WO 2020/057868 (26.03.2020 Gazette 2020/13)**

(54) **VERFAHREN UND VORRICHTUNG ZUM BETREIBEN EINES STEUERUNGSSYSTEMS**

METHOD AND DEVICE FOR OPERATING A CONTROL SYSTEM

PROCÉDÉ ET DISPOSITIF SERVANT À FAIRE FONCTIONNER UN SYSTÈME DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2018 DE 102018216078**

(43) Veröffentlichungstag der Anmeldung:
**28.07.2021 Patentblatt 2021/30**

(73) Patentinhaber: **Robert Bosch GmbH**
**70442 Stuttgart (DE)**

(72) Erfinder: **GROH, Konrad**
**70192 Stuttgart (DE)**

(56) Entgegenhaltungen:
**DE-U1- 202018 104 373**

• **DAVID ROLNICK ET AL: "Deep Learning is Robust to Massive Label Noise", ARXIV.ORG, CORNELL UNIVERSITY LIBRARY, 201 OLIN LIBRARY CORNELL UNIVERSITY ITHACA, NY 14853, 30 May 2017 (2017-05-30), XP081317796**

## Beschreibung

Die Erfindung betrifft ein Verfahren zum Parametrieren eines maschinellen Lernsystems, ein Trainingssystem, ein Steuerungssystem, ein Verfahren zum Betreiben des Steuerungssystems, ein Computerprogramm und ein maschinenlesbares Speichermedium.

Stand der Technik

Aus der DE 20 2017 102 238 U ist ein Verfahren zum Trainieren eines maschinellen Lernsystems bekannt, bei dem Parameter des maschinellen Lernsystems mit einer Trainings-Menge für das maschinelle Lernsystem mit Beobachtungswerten und dazugehörigen gewünschten ersten Ausgabewerten trainiert wird.

Aus der Veröffentlichung von Rolnick David, et al. "Deep learning is robust to massive label noise." arXiv preprint arXiv:1705.10694 (2017), ist bekannt, dass tiefe neuronale Netze in der Lage sind Trainingsdaten zu verallgemeinern, bei denen die Zahl der richtigen Bezeichnungen massiv von falschen Bezeichnungen überwiegen.

Aus der DE 20 2018 104 373 U1 ist eine Vorrichtung, die zum Betreiben eines maschinellen Lernsystems eingerichtet ist, bekannt. David Rolnick et al: "Deep Learning is Robust to Massive Label Noise",ARXIV.ORG, CORNELL UNIVERSITY LIBRARY, 201 OLIN LIBRARY CORNELL UNIVERSITY ITHACA, NY 14853, 30. Mai 2017 (2017-05-30), untersucht das Verhalten von tiefen neuronalen Netzen auf Trainingsmengen mit massiv verrauschten Labels.

Vorteile der Erfindung

Im Folgenden bezeichnet X den Eingangsraum (input space) und Y den Ausgangsraum (target space). Gegeben sei ein Trainingsdatensatz $S = ((x_1, y_1), ..., (x_m, y_m))$. Hierbei wurden die Daten aus einer festen und nicht bekannten Verteilung P über $(X, Y)$ gezogen. Des Weiteren ist eine Verlustfunktion (loss function) $l: Y \times Y \to R$ gegeben. Für eine Funktion $f: X \to Y$ ist der erwartete Verlust (Englisch "expected loss") durch

$$R[f] := \mathbb{E}_{x,y \sim P} l(f(x), y)$$

definiert. Das empirische Risiko (Englisch "empirical risk") ist durch $\hat{R}_S[f] :=$

$$\frac{1}{m} \sum_{i=1}^{m} l(f(x_i), y_i)$$

definiert. Diese Größe wird im Folgenden auch als Kenngröße $\mathcal{L}$ bezeichnet.

Aufgabe eines maschinellen Lernverfahrens ist es, eine Funktion $f: X \to Y$ aus einer Funktionenklasse $F$ zu lernen, die den erwarteten Verlust $R[f]$ minimiert. Da dies in der Regel nicht möglich ist, wird diese Aufgabe ersetzt durch die Aufgabe, basierend auf einem Trainingsdatensatz S eine Funktion $f_S: X \to Y$ aus einer Funktionenklasse $F$ zu lernen, die das empirische Risiko (expected risk) minimiert.

Wurde eine Funktion $f_S$ auf so eine Art gewonnen ist eine zentrale Frage, wie gut $f_S$ für neue Datenpunkte $(x, y) \sim P$ generalisiert. Dies ist charakterisiert durch die Differenz $R[f_S] - \hat{R}_S[f_S]$.

Ein maschinelles Lernsystem, z.B. ein neuronales Netz, kann mit einer Vielzahl von Parametern beschrieben werden. Diese Parameter können unterteilt werden in Architekturparameter, wie etwa die Tiefe, die Anzahl und Form der Filter, die Wahl der Nichtlinearitäten und Verbindungen; und Optimierungsparameter, wie die Schrittweite, die Größe der Batches und die Anzahl der Iterationen. Mit anderen Worten charakterisieren Architekturparameter die Funktion $f$, wohingegen Optimierungsparameter das Optimierungsverfahren charakterisieren, das während des Trainings zum Einsatz kommt.

Die Wahl dieser Parameter kann beispielsweise auf Erfahrungswissen oder der Leistungsfähigkeit des neuronalen Netzes auf einem Validierungsdatensatz basieren. Da ein neuronales Netz i.d.R durch viel mehr Parameter parametriert ist, als Datenpunkte gegeben sind, besteht die Gefahr, dass das Netz die Trainingsdaten auswendig lernt. Ein derart trainiertes Netz ist für den Einsatz in sicherheitskritischen Funktionen, beispielsweise zum automatisierten Fahren, u.U. nicht gut geeignet, da die Ausgabe für neue Datenpunkte möglicherweise nicht gut beherrschbar ist.

Das Verfahren mit den Merkmalen des unabhängigen Anspruch 1 verhindert, dass ein maschinelles Lernsystem beim Training die Trainingsdaten auswendig lernt, d.h. es können Architektur- und/oder Optimierungsparameter durch eine Parametersuche automatisiert bestimmt werden. Die so bestimmten Architektur- und/oder Optimierungsparameter führen dazu, dass das maschinelle Lernsystem verbessert generalisieren kann.

Offenbarung der Erfindung

Die Erfindung betrifft in einem ersten Aspekt ein Verfahren mit den Merkmalen des unabhängigen Anspruch 1. Weitere Aspekte der Erfindung sind Gegenstand der nebengeordneten Ansprüche. Vorteilhafte Weiterbildungen sind Gegenstand der abhängigen Ansprüche.

Betrachtet werden maschinelle Lernsysteme, insbesondere künstliche neuronale Netze. Um eine Klassifikationsaufgabe zu lösen, also die Zuordnung von Eingangssignalen $x$ eines Eingangsraums $X = \mathbb{R}^d$ zu einer Klasse y aus einer Anzahl $k$ vieler Klassen. Diese Zuordnung erfolgt z.B. mittels einer Funktion $f: \mathbb{R}^d \to \mathbb{R}^k$, wobei $\mathbb{R}^k$ ein euklidischer Raum ist. Die Komponenten von $f(x)$ entsprechen jeweils einer der Klassen und charakterisieren hierbei jeweils eine Wahrscheinlichkeit, dass die zugehörige Klasse y eine richtige Klassifikation des Eingangssignals $x$ ist. Um das Eingangssignals $x$ einer bestimmten Klasse zuzuordnen, kann eine argmax-Funktion verwendet werden. Die argmax-Funktion gibt die Koordinate des maximalen Werts von f aus, das heißt $y = N(x) = \arg \max f(x)$.

Trainingsdaten umfassen eine Mehrzahl von Trainingspunkten $(x_T, y_T)$, die Paare beispielhafter Eingangsdaten $x_T$ und zugehöriger gewünschter Klassifikation $y_T$ sind. Falls die Klassifikation $N(x_T)$ des maschinellen Lernsystems korrekt ist, ist der Wert der $i$-ten Koordinate von $f(x_T)$ der größte der Werte. Das heißt, es gilt $f(x_T)_i > f(x_T)_j$ für alle $j \neq i$.

Eine Spanne (Englisch: *margin*) $m$ ist definiert durch

$$m = f(x_T)_i - \max_{j \neq i} f(x_T)_j$$

. Ist die Spanne positiv, dann ist die Klassifikation korrekt, ist sie negativ so ist die Klassifikation falsch.

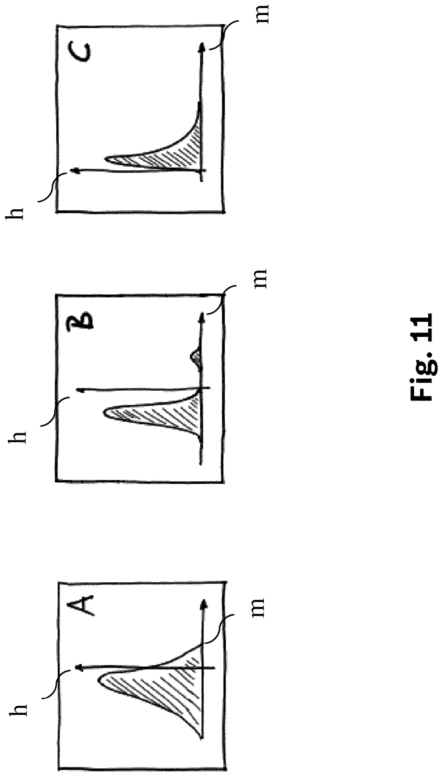

Die Erfindung basiert auf der Beobachtung, dass die Histogramme der Spannen von Trainingsdaten unterschiedlichen Verteilungen folgen, je nachdem, ob das maschinelle Lernsystem die zu Grunde liegende Struktur des Zusammenhangs zwischen Eingangsdaten $x_T$ und Klassifikation $y_T$ korrekt gelernt hat, oder nicht. Figur 11 zeigt beispielhaft derartige Verteilungen. Auf der Abszisse ist jeweils die Spanne m aufgetragen, auf der Ordinate die Häufigkeit $h$.

Trainiert man ein maschinelles Lernsystem mit Trainingsdaten $(x_T, y_T)$, so ergibt sich eine Verteilung wie in Figur 11A oder Figur 11B dargestellt, wenn die Zuordnung von Eingangsdaten $x_T$ und Klassifikation $y_T$ nicht korrekt gelernt werden konnte, und eine Verteilung wie in Figur 11C dargestellt, wenn die Zuordnung von Eingangsdaten $x_T$ und Klassifikation $y_T$ korrekt gelernt werden konnte. Welche der Verteilungen sich ergibt, hängt von Hyperparametern (im Folgenden mit $\theta_H$ bezeichnet) ab.

Hyperparameter $\theta_H$ können dadurch charakterisiert sein, dass sie beim Training des maschinellen Lernsystems unverändert gehalten werden. Die Hyperparameter $\theta_H$ können beispielsweise Architekturparameter $\theta_A$ und/oder Optimierungsparameter $\theta_O$ umfassen.

Architekturparameter $\theta_A$ charakterisieren die Struktur des maschinellen Lernsystems. Handelt es sich bei dem maschinellen Lernsystem um ein neuronales Netzwerk, umfassen die Architekturparameter $\theta_A$ beispielsweise eine Tiefe (d.h. eine Anzahl Schichten) des neuronalen Netzwerks und/oder die Anzahl von Filtern und/oder Parameter, die die Form der Filter charakterisieren und/oder Parameter, die Nichtlinearitäten des neuronalen Netzwerks charakterisieren und/oder Parameter, die charakterisieren, welche Schichten des neuronalen Netzwerks mit welchen anderen Schichten des neuronalen Netzwerks verbunden sind.

Die Optimierungsparameter $\theta_O$ sind Parameter, die das Verhalten eines Optimierungsalgorithmus zum Anpassen von Parametern $\theta$, die während des Trainings angepasst werden, charakterisieren. Beispielsweise können diese eine numerische Schrittweite und/oder eine Größe von Datenstapeln (Englisch: "batches") und/oder eine Mindest- oder Maximalanzahl Iterationen umfassen.

Für unterschiedliche Werte der Hyperparameter $\theta_H$ ergibt sich ein unterschiedlich guter Lernerfolg des Trainings des maschinellen Lernsystems. Um die Generalisierung des maschinellen Lernsystems möglichst optimal zu gestalten, wurde erkannt, dass die Hyperparameter $\theta_H$ derart zu wählen sind, dass ein korrekt gelabelter Datensatz $X_C = (x_T, y_T)$ gut gelernt werden kann, dass sich also eine Verteilung der Spannen $m$ ähnlich der in Figur 11C gezeigten ergibt, wohingegen sich für einen falsch, insbesondere randomisiert gelabelten Datensatz $X_r = (x_T, \hat{y}_T)$, dessen Klassen $\hat{y}_T$ gegenüber dem korrekt gegabelten Datensatz $X_c$ verändert, insbesondere in der Reihenfolge permutiert, sind, eine Verteilung der Spannen m ähnlich der in Figur 11A oder 11B gezeigten ergibt. Vorzugsweise werden die Hyperparameter $\theta_H$, die beispielsweise einen Regularisierungsparameter, insbesondere einen $l_1$-Regularisierungsparameter $\lambda$ umfassen gerade so groß gewählt, dass die Verteilung der Spannen $m$ wie in Figur 11B gezeigt ein zweites Maximum als Funktion der Spannen aufweist (d.h. der Regularisierungsparameter wird so groß gewählt, dass die Verteilung ein zweites Maximum aufweist, bei kleiner gewähltem Regularisierungsparameter jedoch nicht).

Nachfolgend werden Ausführungsformen der Erfindung unter Bezugnahme auf die beiliegenden Zeichnungen näher erläutert. In den Zeichnungen zeigen:

Figur 1    schematisch einen Aufbau einer Ausführungsform der Erfindung;

Figur 2    schematisch ein Ausführungsbeispiel zur Steuerung eines wenigstens teilautonomen Roboters;

Figur 3    schematisch ein Ausführungsbeispiel zur Steuerung eines Fertigungssystems;

Figur 4    schematisch ein Ausführungsbeispiel zur Steuerung eines persönlichen Assistenten;

Figur 5    schematisch ein Ausführungsbeispiel zur Steuerung eines Zugangssystems;

Figur 6    schematisch ein Ausführungsbeispiel zur Steuerung eines Überwachungssystems;

Figur 7    schematisch ein Ausführungsbeispiel zur Steuerung eines medizinisch bildgebenden Systems;

Figur 8    schematisch ein Trainingssystem;

Figur 9    in einem Flussdiagramm einen möglichen Ablauf des Verfahrens zum Ermitteln optimaler Hyperparameter;

Figur 10   in einem Flussdiagramm einen möglichen Ablauf zum Betreiben des maschinellen Lernsystems;

Figur 11   beispielhaft statistische Verteilungen von Spannen.

Beschreibung der Ausführungsbeispiele

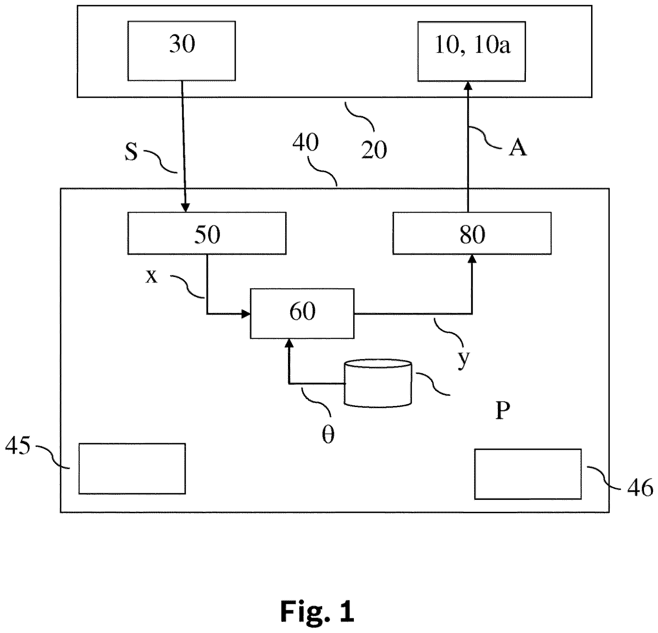

Figur 1 zeigt einen Aktor 10 in seiner Umgebung 20 in Interaktion mit einem Steuerungssystem 40. Aktor 10 und Umgebung 20 werden gemeinschaftlich auch als Aktorsystem bezeichnet. In vorzugsweise regelmäßigen zeitlichen Abständen wird ein Zustand des Aktorsystems mit einem Sensor 30 erfasst, der auch durch eine Mehrzahl von Sensoren gegeben sein kann. Das Sensorsignal S - bzw. im Fall mehrerer Sensoren je ein Sensorsignal S - des Sensors 30 wird an das Steuerungssystem 40 übermittelt. Das Steuerungssystem 40 empfängt somit eine Folge von Sensorsignalen S. Das Steuerungssystem 40 ermittelt hieraus Ansteuersignale A, welche an den Aktor 10 übertragen werden.

Das Steuerungssystem 40 empfängt die Folge von Sensorsignalen S des Sensors 30 in einer optionalen Empfangseinheit 50, die die Folge von Sensorsignalen S in eine Folge von Eingangssignalen x umwandelt (alternativ kann auch unmittelbar je das Sensorsignal S als Eingangssignal x übernommen werden). Das Eingangssignal x kann beispielsweise ein Ausschnitt oder eine Weiterverarbeitung des Sensorsignals S sein. Das Eingangssignal x ist ein Bild. Mit anderen Worten wird Eingangssignal x abhängig von Sensorsignal S ermittelt. Das Eingangssignal x wird einem maschinellen Lernsystem 60, das beispielsweise ein neuronales Netzwerk ist, zugeführt.

Das maschinelle Lernsystem 60 wird vorzugsweise parametriert durch Parameter θ, die in einem Parameterspeicher P hinterlegt sind und von diesem bereitgestellt werden.

Das maschinelle Lernsystem 60 ermittelt aus den Eingangssignalen x Ausgangssignale y. Die Ausgangssignale y werden einer optionalen Umformeinheit 80 zugeführt, die hieraus Ansteuersignale A ermittelt, welche dem Aktor 10 zugeführt werden, um den Aktor 10 entsprechend anzusteuern.

Der Aktor 10 empfängt die Ansteuersignale A, wird entsprechend angesteuert und führt eine entsprechende Aktion aus. Der Aktor 10 kann hierbei eine (nicht notwendigerweise baulich integrierte) Ansteuerlogik umfassen, welches aus dem Ansteuersignal A ein zweites Ansteuersignal ermittelt, mit dem dann der Aktor 10 angesteuert wird.

In weiteren Ausführungsformen umfasst das Steuerungssystem 40 den Sensor 30. In noch weiteren Ausführungsformen umfasst das Steuerungssystem 40 alternativ oder zusätzlich auch den Aktor 10.

Das Steuerungssystem 40 umfasst eine Ein- oder Mehrzahl von Prozessoren 45 und wenigstens ein maschinenlesbares Speichermedium 46, auf dem Anweisungen gespeichert sind, die dann, wenn sie auf den Prozessoren 45 ausgeführt werden, das Steuerungssystem 40 veranlassen, das erfindungsgemäße Verfahren auszuführen.

In alternativen Ausführungsformen ist alternativ oder zusätzlich zum Aktor 10 eine Anzeigeeinheit 10a vorgesehen.

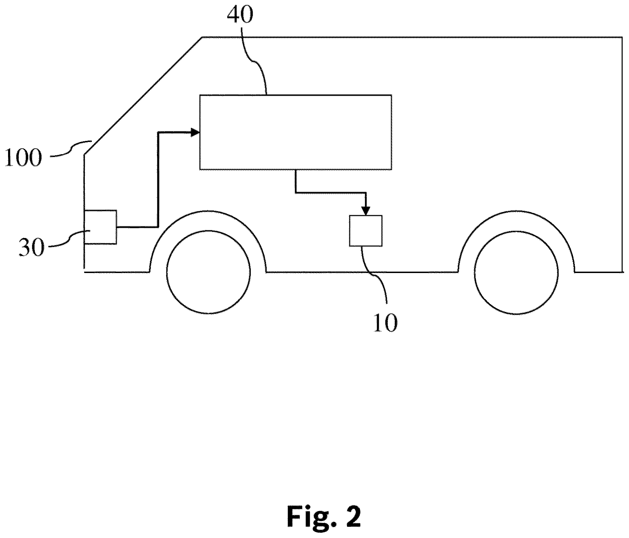

Figur 2 zeigt ein Ausführungsbeispiel, in dem das Steuerungssystem 40 zur Steuerung eines wenigstens teilautonomen Roboters, hier eines wenigstens teilautonomen Kraftfahrzeugs 100, eingesetzt wird.

Bei dem Sensor 30 kann es sich beispielsweise um einen oder mehrere vorzugsweise im Kraftfahrzeug 100 angeordnete Videosensoren und/oder einen oder mehrere Radarsensoren und/oder einen oder mehrere Ultraschallsensoren und/oder einen oder mehrere LiDAR-Sensoren und/oder einen oder mehrere Positionssensoren (beispielsweise GPS) handeln. Alternativ oder zusätzlich kann der Sensor 30 auch ein Informationssystem umfassen, das eine Information über einen Zustand des Aktorsystems ermittelt, wie beispielsweise ein Wetterinformationssystem, das einen aktuellen oder zukünftigen Zustand des Wetters in der Umgebung 20 ermittelt.

Das maschinelle Lernsystem 60 kann aus den Eingangsdaten x beispielsweise Gegenstände in der Umgebung des wenigstens teilautonomen Roboters detektieren. Bei dem Ausgangssignal y kann es sich um eine Information handeln, die charakterisiert, wo in der Umgebung des wenigstens teilautonomen Roboters Gegenstände vorhanden sind. Das Ausgangssignal A kann dann abhängig von dieser Information und/oder entsprechend dieser Information ermittelt werden.

Bei dem vorzugsweise im Kraftfahrzeug 100 angeordneten Aktor 10 kann es sich beispielsweise um eine Bremse, einen Antrieb oder eine Lenkung des Kraftfahrzeugs 100 handeln. Das Ansteuersignal A kann dann derart ermittelt werden, dass der Aktor oder die Aktoren 10 derart angesteuert wird, dass das Kraftfahrzeug 100 beispielsweise eine Kollision mit den vom maschinellen Lernsystem 60 identifizierten Gegenständen verhindert, insbesondere, wenn es sich um Gegenstände bestimmter Klassen, z.B. um Fußgänger, handelt. Mit anderen Worten kann Ansteuersignal A abhängig von der ermittelten Klasse und/oder entsprechend der ermittelten Klasse ermittelt werden.

Alternativ kann es sich bei dem wenigstens teilautonomen Roboter auch um einen anderen mobilen Roboter (nicht abgebildet) handeln, beispielsweise um einen solchen, der sich durch Fliegen, Schwimmen, Tauchen oder Schreiten fortbewegt. Bei dem mobilen Roboter kann es sich beispielsweise auch um einen wenigstens teilautonomen Rasenmäher oder einen wenigstens teilautonomen Putzroboter handeln. Auch in diesen Fällen kann das Ansteuersignal A derart ermittelt werden, dass Antrieb und/oder Lenkung des mobilen Roboters derart angesteuert werden, dass der wenigstens teilautonome Roboter beispielsweise eine Kollision mit den vom maschinellen Lernsystem 60 identifizierten Gegenständen verhindert,

In einer weiteren Alternative kann es sich bei dem wenigstens teilautonomen Roboter auch um einen Gartenroboter (nicht abgebildet) handeln, der mit einem bildgebenden Sensor 30 und dem maschinellen Lernsystem 60 eine Art oder einen Zustand von Pflanzen in der Umgebung 20 ermittelt. Bei dem Aktor 10 kann es sich dann beispielsweise um einen Applikator von Chemikalien handeln. Das Ansteuersignal A kann abhängig von der ermittelten Art oder vom ermittelten Zustand der Pflanzen derart ermittelt werden, dass eine der ermittelten Art oder dem ermittelten Zustand entsprechende Menge der Chemikalien aufgebracht wird.

In noch weiteren Alternativen kann es sich bei dem wenigstens teilautonomen Roboter auch um ein Haushaltsgerät (nicht abgebildet), insbesondere eine Waschmaschine, einen Herd, einen Backofen, eine Mikrowelle oder eine Spülmaschine handeln. Mit dem Sensor 30, beispielsweise einem optischen Sensor, kann ein Zustand eines mit dem Haushaltsgerät behandelten Objekts erfasst werden, beispielsweise im Falle der Waschmaschine ein Zustand von Wäsche, die in der Waschmaschine befindlich ist. Mit dem maschinellen Lernsystem 60 kann dann eine Art oder ein Zustand dieses Objekts ermittelt und vom Ausgangssignal y charakterisiert werden. Das Ansteuersignal A kann dann derart ermittelt werden, dass das Haushaltsgerät abhängig von der ermittelten Art oder dem ermittelten Zustand des Objekts angesteuert wird. Beispielsweise kann im Falle der Waschmaschine diese abhängig davon angesteuert werden, aus welchem Material die darin befindliche Wäsche ist. Ansteuersignal A kann dann abhängig davon gewählt werden, welches Material der Wäsche ermittelt wurde.

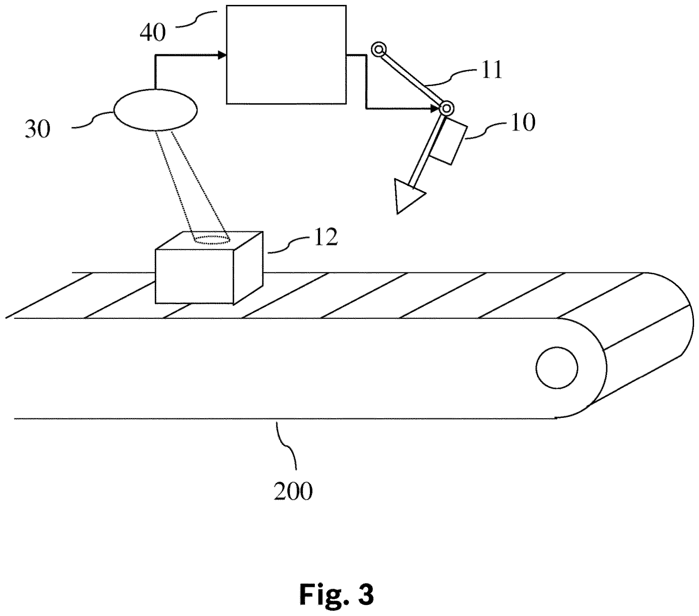

Figur 3 zeigt ein Ausführungsbeispiel, in dem das Steuerungssystem 40 zur Ansteuerung einer Fertigungsmaschine 11 eines Fertigungssystems 200 verwendet wird, indem ein diese Fertigungsmaschine 11 steuernder Aktor 10 angesteuert wird. Bei der Fertigungsmaschine 11 kann es sich beispielsweise um eine Maschine zum Stanzen, Sägen, Bohren und/oder Schneiden handeln.

Bei dem Sensor 30 dann beispielsweise um einen optischen Sensor handeln, der z.B. Eigenschaften von Fertigungserzeugnissen 12 erfasst. Es ist möglich, dass der die Fertigungsmaschine 11 steuernde Aktor 10 abhängig von den ermittelten Eigenschaften des Fertigungserzeugnisses 12 angesteuert wird, damit die Fertigungsmaschine 11 entsprechend einen nachfolgenden Bearbeitungsschritt dieses Fertigungserzeugnisses 12 ausführt. Es ist auch möglich, dass der Sensor 30 die Eigenschaften des von der Fertigungsmaschine 11 bearbeiteten Fertigungserzeugnisses 12 ermittelt, und abhängig davon eine Ansteuerung der Fertigungsmaschine 11 für ein nachfolgendes Fertigungserzeugnis anpasst.

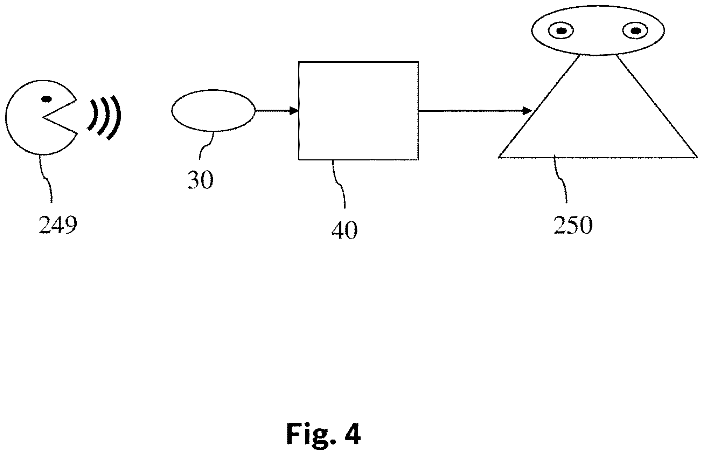

Figur 4 zeigt ein Ausführungsbeispiel, bei dem das Steuerungssystem 40 zur Steuerung eines persönlichen Assistenten 250 eingesetzt wird. Der Sensor 30 ist bevorzugt ein akustischer Sensor, der Sprachsignale eines Nutzers 249 empfängt. Alternativ oder zusätzlich kann der Sensor 30 auch eingerichtet sein, optische Signale zu empfangen, beispielsweise Videobilder einer Geste des Nutzers 249.

Abhängig von den Signalen des Sensors 30 ermittelt das Steuerungssystem 40 ein Ansteuersignal A des persönlichen Assistenten 250, beispielsweise, indem das maschinelle Lernsystem eine Gestenerkennung durchführt. Dem persönlichen Assistenten 250 wird dann dieses ermittelte Ansteuersignal A übermittelt und er somit entsprechend angesteuert. Dieses ermittelte Ansteuersignal A ist kann insbesondere derart gewählt werden, dass es einer vermuteten gewünschten Ansteuerung durch den Nutzer 249 entspricht. Diese vermutete gewünschte Ansteuerung kann abhängig von der vom maschinellen Lernsystem 60 erkannten Geste ermittelt werden. Das Steuerungssystem 40 kann dann abhängig von der vermuteten gewünschten Ansteuerung das Ansteuersignal A zur Übermittlung an den persönlichen Assistenten 250 wählen und/oder das Ansteuersignal A zur Übermittlung an den persönlichen Assistenten entsprechend der vermuteten gewünschten Ansteuerung 250 wählen.

Diese entsprechende Ansteuerung kann beispielsweise beinhalten, dass der persönliche Assistent 250 Informationen aus einer Datenbank abruft und sie für den Nutzer 249 rezipierbar wiedergibt.

Anstelle des persönlichen Assistenten 250 kann auch ein Haushaltsgerät (nicht abgebildet), insbesondere eine Waschmaschine, ein Herd, ein Backofen, eine Mikrowelle oder eine Spülmaschine vorgesehen sein, um entsprechend angesteuert zu werden.

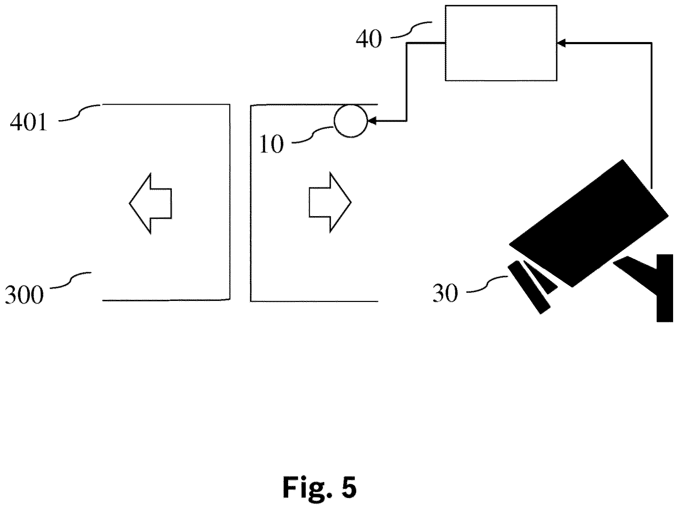

Figur 5 zeigt ein Ausführungsbeispiel, bei dem das Steuerungssystem 40 zur Steuerung eines Zugangssystems 300 eingesetzt wird. Das Zugangssystem 300 kann eine physische Zugangskontrolle, beispielsweise eine Tür 401 umfassen. Bei dem Sensor 30 kann es sich beispielsweise um einen optischen Sensor (beispielsweise zur Erfassung von Bild- oder Videodaten) handeln, der eingerichtet ist, ein Gesicht zu erfassen. Mittels des maschinellen Lernsystems 60 kann dieses erfasste Bild interpretiert werden. Beispielsweise kann die Identität einer Person ermittelt werden. Der Aktor 10 kann ein Schloss sein, dass abhängig vom Ansteuersignal A die Zugangskontrolle freigibt, oder nicht, beispielsweise die Tür 401 öffnet, oder nicht. Hierzu kann das Ansteuersignal A abhängig von der der Interpretation des maschinellen Lernsystems 60 gewählt werden, beispielsweise abhängig von der ermittelten Identität der Person. An Stelle der physischen Zugangskontrolle kann auch eine logische Zugangskontrolle vorgesehen sein.

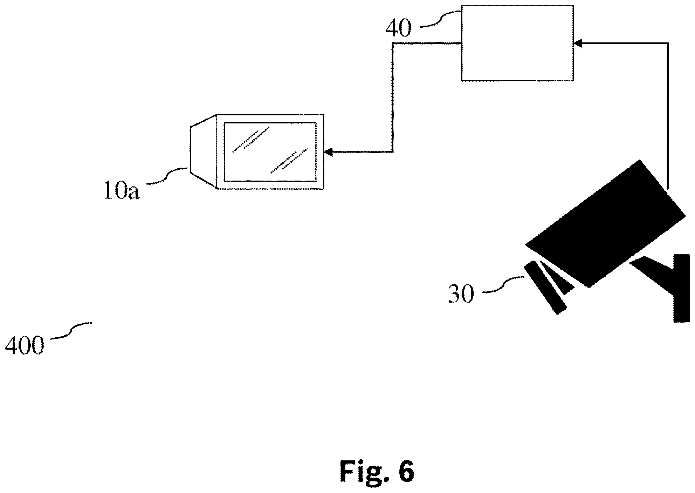

Figur 6 zeigt ein Ausführungsbeispiel, bei dem das Steuerungssystem 40 zur Steuerung eines Überwachungssystems 400 verwendet wird. Von dem in Figur 5 dargestellten Ausführungsbeispiel unterscheidet sich dieses Ausführungsbeispiel dadurch, dass an Stelle des Aktors 10 die Anzeigeeinheit 10a vorgesehen ist, die vom Steuerungssystem 40 angesteuert wird. Beispielsweise kann vom maschinellen Lernsystem 60 ermittelt werden, ob ein vom optischen Sensor aufgenommener Gegenstand verdächtig ist, und das Ansteuersignal A dann derart gewählt werden, dass dieser Gegenstand von der Anzeigeeinheit 10a farblich hervorgehoben dargestellt wird.

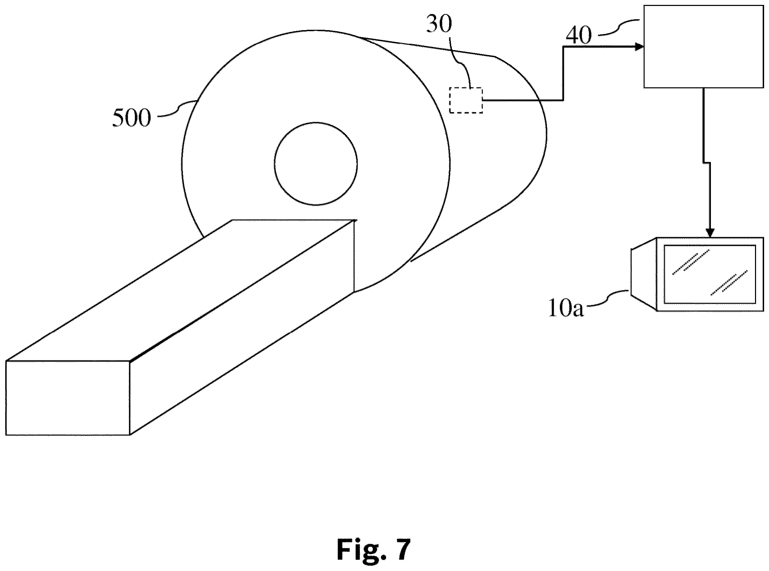

Figur 7 zeigt ein Ausführungsbeispiel, bei dem das Steuerungssystem 40 zur Steuerung eines medizinischen bildgebenden System 500, beispielsweise eines MRT-, Röntgen- oder Ultraschallgeräts, verwendet wird. Der Sensor 30 kann beispielsweise durch einen bildgebenden Sensor gegeben sein, durch das Steuerungssystem 40 wird die Anzeigeeinheit 10a angesteuert. Beispielsweise kann vom maschinellen Lernsystem 60 ermittelt werden, ob ein vom bildgebenden Sensor aufgenommener Bereich auffällig ist, und das Ansteuersignal A dann derart gewählt werden, dass dieser Bereich von der Anzeigeeinheit 10a farblich hervorgehoben dargestellt wird.

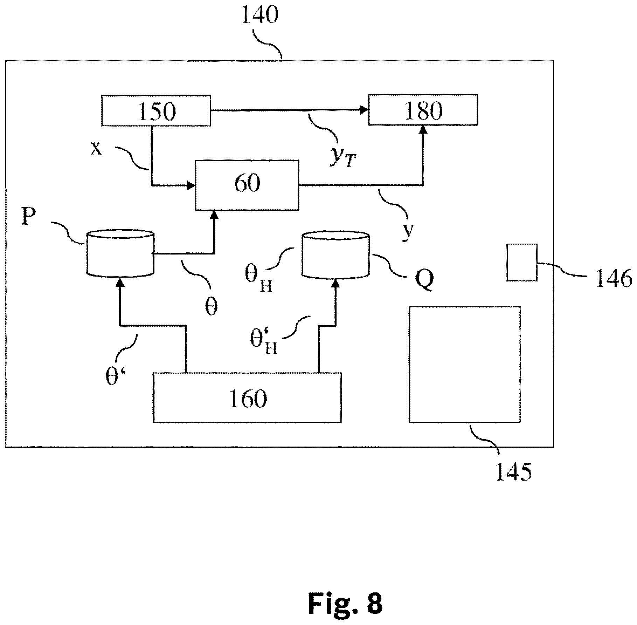

Figur 8 zeigt schematisch ein Ausführungsbeispiel eines Trainingssystems 140 zum Trainieren des maschinellen Lernsystems 60. Eine Trainingsdateneinheit 150 ermittelt geeignete Eingangssignale x, die dem maschinellen Lernsystem 60 zugeführt werden. Beispielsweise greift die Trainingsdateneinheit 150 auf eine computerimplementierte Datenbank zu, in dem ein Satz von Trainingsdaten gespeichert ist, und wählt z.B. zufällig aus dem Satz von Trainingsdaten Eingangssignale x aus. Optional ermittelt die Trainingsdateneinheit 150 auch zu den Eingangssignalen x zugeordnete gewünschte, oder "tatsächliche", Ausgangssignale $y_T$, die einer Bewertungseinheit 180 zugeführt werden.

Das künstliche neuronale Netz x ist eingerichtet, aus den ihm zugeführten Eingangssignalen x zugehörige Ausgangssignale y zu ermitteln. Diese Ausgangssignale y werden der Bewertungseinheit 180 zugeführt.

Das Trainingssystem 140 umfasst einen zweiten Parameterspeicher Q, in dem die Hyperparameter $\theta_H$ gespeichert sind.

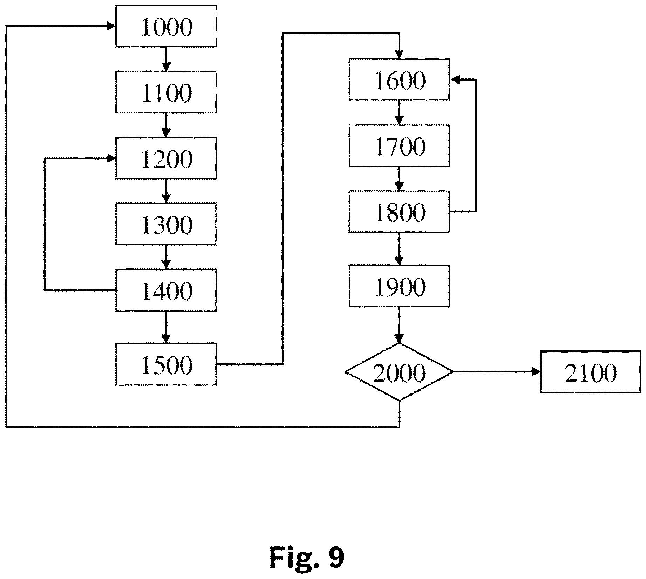

Eine Modifikationseinheit 160 ermittelt z.B. mit dem in Figur 9 illustrierten Verfahren neue Parameter θ' und führt diese dem Parameterspeicher P zu, wo sie die Parameter θ ersetzen. Die Modifikationseinheit 160 ermittelt z.B. mit dem in Figur 9 illustrierten Verfahren neue Hyperparameter θ'$_H$ und führt diese dem zweiten Parameterspeicher Q zu.

Die Bewertungseinheit 180 kann beispielsweise mittels einer von den Ausgangssignalen y und den gewünschten Ausgangssignalen $y_T$ abhängigen Kostenfunktion (Englisch: loss *function)* die Kenngröße $\mathcal{L}$ ermitteln, die eine Leistungsfähigkeit des maschinellen Lernsystems 60 charakterisiert. Die Parameter θ können abhängig von der Kenngröße $\mathcal{L}$ optimiert werden.

In weiteren bevorzugten Ausführungsformen umfasst das Trainingssystem 140 eine Ein- oder Mehrzahl von Prozessoren 145 und wenigstens ein maschinenlesbares Speichermedium 146, auf dem Anweisungen gespeichert sind, die dann, wenn sie auf den Prozessoren 145 ausgeführt werden, das Steuerungssystem 140 veranlassen, das erfindungsgemäße Verfahren auszuführen.

Figur 9 zeigt in einem Flussdiagramm den Ablauf eines Verfahrens zum Ermitteln optimaler Hyperparameter $\theta_H$ gemäß einer Ausführungsform.

Zunächst (1000) werden die Hyperparameter $\theta_H$ initialisiert, beispielsweise zufällig oder auf fest vorgebbare Werte. Anschließend wird von der Trainingsdateneinheit 150 ein Satz korrekt gelabelter Trainingsdaten $X_C = (x_T, y_T)$ zur Verfügung gestellt. Die Parameter θ werden auf einen vorgebbaren initialen Wert gesetzt, z.B. können sie auf zufällig gewählte Werte gesetzt werden.

Dann (1100) wird mittels eines echten Zufallszahlengenerators oder eines Generators von Pseudozufallszahlen eine zufällige Permutation der Zuordnung von Eingangssignalen $x_T$ und zugehörigen Ausgangssignalen, also Klassifikationen, $y_T$ erzeugt. Entsprechend dieser zufälligen Permutation werden die randomisierten Klassifikationen $\hat{y}_T$ durch Permutation der Klassifikationen $y_T$ ermittelt und der nicht korrekt gelabelte Datensatz $X_r = (x_T, \hat{y}_T)$ erzeugt.

Alternativ kann in Schritt (1100) auch mittels des echten Zufallszahlengenerators oder des Generators von Pseudozufallszahlen auch randomisierte Klassifikationen $\hat{y}_T$ durch zufälliges Ziehen aus der Menge der möglichen Klassen erzeugt werden, und so der nicht korrekt gelabelte Datensatz $X_r = (x_T, \hat{y}_T)$ erzeugt werden.

Dann (1200) werden aus dem Satz korrekt gelabelter Trainingsdaten $X_C$ Eingangssignale x=$x_T$ ermittelt, dem maschinellen Lernsystem 60 zugeführt und hieraus Ausgangssignale y ermittelt. Hierzu werden wird für jedes Eingangssignal x die Funktion die k-dimensionale Größe $f(x)$ ermittelt und das Ausgangssignal y als diejenige Komponente von $f(x)$ ermittelt, die den maximalen Wert aufweist.

Anschließend (1300) werden in der Bewertungseinheit 180 die Ausgangssignale y, und die zu den Eingangssignalen x zugeordneten tatsächlichen, also gewünschten Ausgangssignale $y_T$ bereitgestellt.

Anschließend (1400) wird abhängig von den ermittelten Ausgangssignalen y und den gewünschten Ausgangssignalen $y_T$ die Kenngröße $\mathcal{L}$ ermittelt. Es werden dann mit Hilfe eines Optimierungsverfahrens, beispielsweise eines Gradientenabstiegsverfahrens, neue Parameter θ' ermittelt, die die Kenngröße $\mathcal{L}$ optimieren, indem Schritte (1200) und (1300) mit jeweils neuen Parametern θ' ggf. mehrfach iteriert ausgeführt werden, bis optimale neue Parameter θ' ermittelt wurden. Diese werden dann im ersten Parameterspeicher P gespeichert.

Schließlich (1500) werden mittels der ermittelten k-dimensionalen Größen $f(x)$, die sich für die optimalen neuen Parameter θ' ergeben haben, die Spannen m ermittelt, sowie eine Kennzahl, die die statistische Verteilung der Spannen *m* charakterisiert, beispielsweise einen Anteil derjenigen Spannen *m,* der positiv ist. Die Parameter θ werden erneut auf einen vorgebbaren initialen Wert gesetzt, z.B. können sie auf zufällig gewählte Werte gesetzt werden,

Die Schritte (1200) bis (1500) werden nun entsprechend für den nicht korrekt gelabelten Datensatz $X_r$ wiederholt.

Zunächst (1600) werden hierzu aus dem Satz nicht korrekt gelabelter Trainingsdaten X, Eingangssignalen x=$x_T$ ermittelt, dem maschinellen Lernsystem 60 zugeführt und hieraus Ausgangssignale y ermittelt. Hierzu werden wird für jedes Eingangssignal x die Funktion die k-dimensionale Größe *f(x)* ermittelt und das Ausgangssignal y als diejenige Komponente von *f(x)* ermittelt, die den maximalen Wert aufweist.

Anschließend (1700) werden in der Bewertungseinheit 180 die Ausgangssignale y, und die zu den Ausgangssignale x zugeordneten tatsächlichen, also gewünschten Ausgangssignale $\hat{y}_T$ bereitgestellt.

Anschließend (1800) wird abhängig von den ermittelten Ausgangssignalen y und den gewünschten Ausgangssignalen $\hat{y}_T$ die Kenngröße $\mathcal{L}$ ermittelt. Es werden dann mit Hilfe eines Optimierungsverfahrens, beispielsweise eines Gradientenabstiegsverfahrens, neue Parameter θ' ermittelt, die die Kenngröße $\mathcal{L}$ optimieren, indem Schritte (1600) und (1700) mit jeweils neuen Parametern θ' ggf. mehrfach iteriert ausgeführt werden, bis optimale neue Parameter θ' ermittelt wurden.

Schließlich (1900) werden mittels der ermittelten k-dimensionalen Größen *f(x)*, die sich für die optimalen neuen Parameter θ' für die nicht korrekt gelabelten Trainingsdaten $X_r$ ergeben haben, zweite Spannen m' ermittelt, sowie eine Kennzahl, die die statistische Verteilung der zweiten Spannen m' charakterisiert, beispielsweise einen zweiten Anteil derjenigen zweiten Spannen m', der positiv ist.

Nun (2000) wird überprüft, ob der ermittelte Anteil größer ist als ein erster Schwellwert und ob der ermittelte zweite Anteil kleiner ist als ein zweiter Schwellwert. Ist dies nicht der Fall, werden die Hyperparameter $θ_H$ variiert, beispielsweise zufällig auf einem vorgebbaren diskreten Raster, und es wird zurückverzweigt zu Schritt (1000) und das Verfahren mit variierten Hyperparametern $θ_H$ erneut durchgeführt (hierbei werden in Schritt (1000) selbstverständlich die Hyperparameter $θ_H$ nicht neu initialisiert). Wurden alle möglichen Werte der Hyperparameter $θ_H$ exploriert, bricht das Verfahren mit einer Fehlermeldung ab.

Ist hingegen der ermittelte Anteil größer ist als ein erster Schwellwert und der ermittelte zweite Anteil kleiner ist als ein zweiter Schwellwert, werden die aktuellen Werte der Hyperparameter $θ_H$ im zweiten Parameterspeicher Q gespeichert. Damit endet das Verfahren.

Alternativ zum sukzessiven Variieren und Evaluieren der Hyperparameter $θ_H$ ist es auch möglich, zunächst für alle auf einem vorgebbaren diskreten Raster möglichen Werte der Hyperparameter $θ_H$ jeweils den Anteil und den zweiten Anteil zu ermitteln, und aus allen möglichen Werten der Hyperparameter $θ_H$ denjenigen auszuwählen, für den die Bedingung, dass der ermittelte Anteil größer ist als ein erster Schwellwert und der ermittelte zweite Anteil kleiner ist als ein zweiter Schwellwert am besten, beispielsweise Pareto-optimal, erfüllt ist.

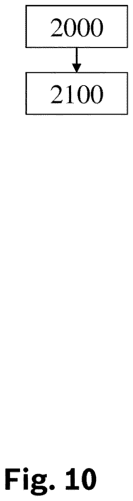

Figur 10 zeigt den Ablauf des Verfahrens zum Betreiben des maschinellen Lernsystems 60. Das maschinelle Lernsystem 60 empfängt (2000) Eingangsdaten x und ermittelt mit Hilfe einer durch die Parameter θ parametrierten Funktion f zugehörige Ausgangsdaten y. Abhängig von den Ausgangsdaten y können Ansteuersignale A ermittelt werden (2100). Damit endet das Verfahren.

Es versteht sich, dass die Verfahren nicht nur wie beschrieben vollständig in Software implementiert sein können. Sie können auch in Hardware implementiert sein, oder in einer Mischform aus Software und Hardware.

**Patentansprüche**

1. Computerimplementiertes Verfahren zum Parametrieren eines maschinellen Lernsystems (60), welches eingerichtet ist, aus Eingangssignalen (x), die Bilder sind, jeweils als Ausgangssignal (y) eine zugehörige Klasse einer Anzahl k vieler Klassen zu ermitteln, wobei das maschinelle Lernsystem für jedes ihm zugeführte Eingangssignal (x) eine k-dimensionale Größe f(x) ermittelt und das zugehörige Ausgangssignal (y) als diejenige Koordinate von f(x) ermittelt, die den maximalen Wert aufweist,

   wobei das maschinelle Lernsystem (60) einmal mit korrekt gelabelten Trainingsdaten ($X_c$) trainiert wird und einmal mit nicht korrekt gelabelten Trainingsdaten ($X_r$) trainiert wird,
   wobei Hyperparameter ($θ_H$) des maschinellen Lernsystems (60) derart gewählt werden, dass das jeweilige trainierte maschinelle Lernsystem (60) tatsächliche Klassifikationen ($y_T$) der korrekt gelabelten Trainingsdaten ($X_c$) besser reproduzieren kann als tatsächliche Klassifikationen ($y_T$) der nicht korrekt gelabelten Trainingsdaten ($X_r$),
   wobei die Hyperparameter ($θ_H$) derart gewählt werden, dass eine statistische Häufigkeitsverteilung von Spannen (m) für das trainierte maschinelle Lernsystem (60), die sich ergibt, wenn dem maschinellen Lernsystem (60) nicht korrekt gelabelten Trainingsdaten ($X_r$) zugeführt werden, als Funktion der Spanne (m) zwei Maxima aufweist,
   wobei die Spannen (m) durch
   $$m = f(x_T)_i - \max_{i \neq i} f(x_T)_j$$
   definiert sind,
   wobei die Trainingsdaten eine Mehrzahl von Trainingspunkten ($x_T$, $y_T$) umfassen, die Paare von Eingangsdaten ($x_T$) und zugehöriger Klassifikation ($y_T$) sind, und falls die Klassifikation ($N(x_T)$ = arg max. $f(x_T)$) des maschinellen Lernsystems (60) korrekt ist, ist der Wert der $i$-ten Koordinate von $f(x_T)$ der größte der Werte.

2. Verfahren nach einem der vorherigen Ansprüche, wobei die tatsächlichen Klassifikationen ($y_T$) der nicht korrekt gelabelten Trainingsdaten ($X_r$) eine Permutation der tatsächlichen Klassifikationen ($y_T$) der korrekt gelabelten Trainingsdaten ($X_c$) sind.

3. Verfahren nach Anspruch 2, wobei die nicht korrekt gelabelten Trainingsdaten ($X_r$) durch eine zufällige Permutation der tatsächlichen Klassifikationen ($y_T$) aus den korrekt gelabelten Trainingsdaten ($X_c$) ermittelt werden.

4. Verfahren nach einem der vorherigen Ansprüche, wobei die Hyperparameter ($\theta_H$) derart gewählt werden, dass der Anteil der vom trainierten maschinellen Lernsystem (60) richtig reproduzierten tatsächlichen Klassifikationen ($y_T$) der korrekten Trainingsdaten ($X_c$) größer ist als der Anteil der vom trainierten maschinellen Lernsystem (60) richtig reproduzierten tatsächlichen Klassifikationen ($y_T$) der nicht korrekt gelabelten Trainingsdaten ($X_r$).

5. Verfahren nach Anspruch 4, wobei die die Hyperparameter ($\theta_H$) derart gewählt werden, dass der Anteil der vom trainierten maschinellen Lernsystem (60) richtig reproduzierten tatsächlichen Klassifikationen ($y_T$) der korrekt gelabelte Trainingsdaten ($X_c$) größer ist als ein erster vorgebbarer Schwellwert, und/oder dass der Anteil der vom trainierten maschinellen Lernsystem (60) richtig reproduzierten tatsächlichen Klassifikationen ($y_T$) der nicht korrekt gelabelten Trainingsdaten ($X_r$) kleiner ist als ein zweiter vorgebbarer Schwellwert.

6. Verfahren nach Anspruch 1, wobei die Hyperparameter ($\theta_H$) derart gewählt werden, dass die statistische Häufigkeitsverteilung von Spannen ($m$) für das trainierte maschinelle Lernsystem (60), die sich ergibt, wenn dem maschinellen Lernsystem (60) nicht gelabelten Trainingsdaten ($X_c$) zugeführt werden, als Funktion der Spanne ($m$) nur ein Maximum aufweist, wobei dieses Maximum bei einem Wert der Spanne ($m$) größer als Null angenommen wird.

7. Trainingssystem (140), welches eingerichtet ist, das Verfahren nach einem der Ansprüche 1 bis 6 auszuführen.

8. Computerimplementiertes Verfahren zum Betreiben eines Steuerungssystems (40) umfassend ein maschinelles Lernsystem (60), welches mittels des Verfahrens nach einem der Ansprüche 1 bis 6 trainiert wurde, und wobei dann abhängig von einem mittels dem maschinellen Lernsystem (60), trainiert mit dem korrekt gelabelten Trainingsdaten ($X_c$), ermittelten Ausgangssignals (y) ein Ansteuerungssignal (A) ermittelt wird.

9. Verfahren nach Anspruch 8, wobei abhängig von dem ermittelten Ansteuersignal (A) ein wenigstens teilautonomer Roboter (100) und/oder ein Fertigungssystem (200) und/oder ein persönlicher Assistent (250) und/oder ein Zugangssystem (300) und/oder ein Überwachungssystem (400) oder ein medizinisch bildgebendes System (500) angesteuert wird.

10. Steuerungssystem (40) umfassend eine Ein- oder Mehrzahl von Prozessoren (45) und wenigstens ein maschinenlesbares Speichermedium (46), auf dem Anweisungen gespeichert sind, die dann, wenn sie auf den Prozessoren (45) ausgeführt werden, das Steuerungssystem (40) veranlassen, das Verfahren nach einem der Ansprüche 8 oder 9 auszuführen.

11. Computerprogramm, umfassend Befehle, die bei der Ausführung des Programms durch einen Computer diesen veranlassen, das Verfahren nach Anspruch 1 bis 6, oder 8, oder 9 auszuführen.

12. Maschinenlesbares Speichermedium (46, 146), auf dem das Computerprogramm nach Anspruch 11 gespeichert ist.

**Claims**

1. Computer-implemented method for parametrizing a machine learning system (60) configured to determine an associated class of a number k of many classes from input signals (x), which are images, in each case as an output signal (y), wherein the machine learning system, for each input signal (x) fed to it, determines a k-dimensional variable f(x) and determines the associated output signal (y) as that coordinate of f(x) which has the maximum value, wherein the machine learning system (60) is trained once with correctly labelled training data ($X_c$) and is trained once with incorrectly labelled training data ($X_r$),

   wherein hyperparameters ($\theta_H$) of the machine learning system (60) are selected in such a way that the respective trained machine learning system (60) can reproduce actual classifications ($y_r$) of the correctly labelled training data ($X_c$) better than actual classifications ($y_r$) of the incorrectly labelled training data ($X_r$), wherein the hyperparameters ($\theta_H$) are selected

in such a way that a statistical frequency distribution of margins (m) for the trained machine learning system (60) which results when incorrectly labelled training data ($X_r$) are fed to the machine learning system (60) has two maxima as a function of the margin (m),

wherein the margins (m) are defined by

$$m = f(x_T)_i - \max_{j \neq i} f(x_T)_j \,,$$

wherein the training data comprise a plurality of training points ($x_T$, $y_T$) which are pairs of input data ($x_T$) and an associated classification ($y_T$), and if the classification ($N(x_T) = \arg\max f(x_T)$) of the machine learning system (60) is correct, the value of the i-th coordinate of $f(x_T)$ is the largest of the values.

2. Method according to any of the preceding claims, wherein the actual classifications ($y_T$) of the incorrectly labelled training data ($X_r$) are a permutation of the actual classifications ($y_T$) of the correctly labelled training data ($X_c$).

3. Method according to Claim 2, wherein the incorrectly labelled training data ($X_r$) are determined from the correctly labelled training data ($X_c$) by a random permutation of the actual classifications ($y_T$).

4. Method according to any of the preceding claims, wherein the hyperparameters ($\theta_H$) are selected in such a way that the proportion of the actual classifications ($y_T$) of the correct training data ($X_c$) that are correctly reproduced by the trained machine learning system (60) is greater than the proportion of the actual classifications ($y_T$) of the incorrectly labelled training data ($X_r$) that are correctly reproduced by the trained machine learning system (60).

5. Method according to Claim 4, wherein the hyperparameters ($\theta_H$) are selected in such a way that the proportion of the actual classifications ($y_T$) of the correctly labelled training data ($X_c$) that are correctly reproduced by the trained machine learning system (60) is greater than a first predefinable threshold value, and/or in that the proportion of the actual classifications ($y_T$) of the incorrectly labelled training data ($X_r$) that are correctly reproduced by the trained machine learning system (60) is less than a second predefinable threshold value.

6. Method according to Claim 1, wherein the hyperparameters ($\theta_H$) are selected in such a way that the statistical frequency distribution of margins (m) for the trained machine learning system (60) which results when unlabelled training data ($X_c$) are fed to the machine learning system (60) has only one maximum as a function of the margin (m), wherein this maximum is assumed for a value of the margin (m) that is greater than zero.

7. Training system (140) configured to carry out the method according to any of Claims 1 to 6.

8. Computer-implemented method for operating a control system (40) comprising a machine learning system (60) which has been trained by means of the method according to any of Claims 1 to 6, and wherein a control signal (A) is then determined depending on an output signal (y) determined by means of the machine learning system (60), trained with the correctly labelled training data ($X_c$).

9. Method according to Claim 8, wherein an at least partly autonomous robot (100) and/or a manufacturing system (200) and/or a personal assistant (250) and/or an access system (300) and/or a monitoring system (400) or a medical imaging system (500) are/is controlled depending on the determined control signal (A).

10. Control system (40) comprising a single processor or a plurality of processors (45) and at least one machine-readable storage medium (46) on which are stored instructions which, when executed on the processors (45), cause the control system (40) to carry out the method according to either of Claims 8 and 9.

11. Computer program comprising instructions which, when the program is executed by a computer, cause said computer to carry out the method according to Claims 1 to 6, or 8, or 9.

12. Machine-readable storage medium (46, 146) on which the computer program according to Claim 11 is stored.

**Revendications**

1. Procédé mis en oeuvre par ordinateur pour paramétrer un système d'apprentissage automatique (60), lequel est conçu pour déterminer, à partir de signaux d'entrée (x) qui sont des images, respectivement comme signal de sortie (y), une classe associée d'un nombre k de nombreuses classes, le système d'apprentissage automatique déterminant, pour chaque signal d'entrée (x) qui lui est acheminé, une grandeur de dimension k f(x) et déterminant le signal de sortie (y) associé comme la coordonnée de f(x) qui présente la valeur maximale,

le système d'apprentissage automatique (60) étant entraîné une fois avec des données d'entraînement correctement étiquetées ($X_c$) et une fois avec des données d'entraînement incorrectement étiquetées ($X_r$),

des hyperparamètres ($\theta_H$) du système d'apprentissage automatique (60) étant choisis de telle sorte que le système d'apprentissage automatique (60) entraîné respectif puisse mieux reproduire des classifications réelles ($y_r$) des données d'entraînement correctement étiquetées ($X_c$) que des classifications réelles ($y_r$) des données d'entraînement non correctement étiquetées ($X_r$), les hyperparamètres ($\theta_H$) étant choisis de telle sorte qu'une distribution de fréquence statistique de fourchettes (m) pour le système d'apprentissage automatique (60) entraîné, qui est obtenue lorsque des données d'entraînement non correctement étiquetées ($X_r$) sont acheminées au système d'apprentissage automatique (60), présente deux maximas en fonction de la fourchette (m),

les fourchettes (m) étant définies par

$$m = f(x_T)_i - \max_{i \neq i} f(x_T)_j,$$

les données d'entraînement comprenant une pluralité de points d'entraînement ($x_T$, $y_T$), qui sont des paires de données d'entrée ($x_T$) et d'une classification ($y_T$) associée, et dans le cas où la classification ($N(x_T)$ = arg max $f(x_T)$) du système d'apprentissage automatique (60) est correcte, la valeur de l'i-ème coordonnée de $f(x_T)$ étant la plus grande des valeurs.

2. Procédé selon l'une des revendications précédentes, les classifications réelles ($y_T$) des données d'entraînement non correctement étiquetées ($X_r$) étant une permutation des classifications réelles ($y_T$) des données d'entraînement correctement étiquetées ($X_c$).

3. Procédé selon la revendication 2, les données d'entraînement non correctement étiquetées ($X_r$) étant déterminées à partir des données d'entraînement correctement étiquetées ($X_c$) par une permutation aléatoire des classifications réelles ($y_T$).

4. Procédé selon l'une des revendications précédentes, les hyperparamètres ($\theta_H$) étant choisis de manière à ce que la proportion de classifications réelles ($y_T$) des données d'entraînement correctes ($X_c$) reproduites avec exactitude par le système d'apprentissage automatique (60) entraîné soit supérieure à la proportion de classifications réelles ($y_T$) des données d'entraînement incorrectement étiquetées ($X_r$) reproduites avec exactitude par le système d'apprentissage automatique (60) entraîné.

5. Procédé selon la revendication 4, les hyperparamètres ($\theta_H$) étant choisis de telle sorte que la proportion des classifications réelles ($y_T$) des données d'entraînement correctement étiquetées ($X_c$) reproduites avec exactitude par le système d'apprentissage automatique entraîné (60) soit supérieure à une première valeur de seuil pouvant être prédéfinie et/ou en ce que la proportion des classifications réelles ($y_T$) des données d'entraînement incorrectement étiquetées ($X_r$) reproduites avec exactitude par le système d'apprentissage automatique entraîné (60) est inférieure à une deuxième valeur de seuil pouvant être prédéfinie.

6. Procédé selon la revendication 1, les hyperparamètres ($\theta_H$) étant choisis de telle sorte que la distribution de fréquence statistique de fourchettes (m) pour le système d'apprentissage automatique (60) entraîné, qui est obtenue lorsque des données d'entraînement non étiquetées ($X_c$) sont acheminées au système d'apprentissage automatique (60), présente un seul maximum en fonction de la fourchette (m), ce maximum étant supposé pour une valeur de la fourchette (m) supérieure à zéro.

7. Système d'entraînement (140), lequel est conçu pour mettre en oeuvre le procédé selon l'une des revendications 1 à 6.

8. Procédé mis en oeuvre par ordinateur pour faire fonctionner un système de commande (40) comprenant un système d'apprentissage automatique (60), lequel a été entraîné au moyen du procédé selon l'une des revendications 1 à 6, et un signal de commande (A) étant ensuite déterminé en fonction d'un signal de sortie (y) déterminé au moyen du système d'apprentissage automatique (60) entraîné avec les données d'entraînement correctement étiquetées ($X_c$).

9. Procédé selon la revendication 8, un robot (100) au moins partiellement autonome et/ou un système de fabrication (200) et/ou un assistant personnel (250) et/ou un système d'accès (300) et/ou un système de surveillance (400) ou un système d'imagerie médicale (500) étant commandé en fonction du signal de commande (A) déterminé.

10. Système de commande (40) comprenant un ou plusieurs processeurs (45) et au moins un support de stockage lisible par machine (46) sur lequel sont enregistrées des instructions qui, lorsqu'elles sont exécutées sur les processeurs (45), amènent le système de commande (40) à mettre en oeuvre le procédé selon l'une des revendications 8 ou 9.

11. Programme informatique comprenant des instructions qui, lors de l'exécution du programme informatique par un ordinateur, amènent celui-ci à mettre en oeuvre le procédé selon l'une des revendications 1 à 6 ou 8 ou 9.

**12.** Support de stockage lisible par machine (46, 146), sur lequel est enregistré le programme informatique selon la revendication 11.

Fig. 1

**Fig. 2**

EP 3 853 778 B1

Fig. 3

**Fig. 4**

Fig. 5

**Fig. 6**

**Fig. 7**

**Fig. 8**

**Fig. 9**

```
┌──────────┐
│   2000   │
└──────────┘
     │
     ▼
┌──────────┐
│   2100   │
└──────────┘
```

**Fig. 10**

**Fig. 11**

EP 3 853 778 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 202017102238 U

- DE 202018104373 U1

### In der Beschreibung aufgeführte Nicht-Patentliteratur

- **ROLNICK DAVID et al.** Deep learning is robust to massive label noise. *arXiv preprint arXiv:1705.10694,* 2017

- Deep Learning is Robust to Massive Label Noise. **DAVID ROLNICK et al.** ARXIV.ORG. CORNELL UNIVERSITY LIBRARY, 201 OLIN LIBRARY CORNELL UNIVERSITY, 30. Mai 2017